# EUROPÄISCHE PATENTSCHRIFT

(11) **EP 3 175 383 B1**
(45) Veröffentlichungstag und Bekanntmachung des Hinweises auf die Patenterteilung: **18.03.2020**
(21) Anmeldenummer: 15741541.5
(22) Anmeldetag: 23.07.2015
(51) Int. Cl.: G06F 21/34, G06F 21/62, G06F 21/79

(54) **VERFAHREN ZUR ÄNDERUNG DER KONTROLLDATEN EINER CHIPKARTE UND CHIPKARTENSYSTEM**
METHOD FOR CHANGING THE CONTROL DATA OF A CHIP CARD, AND CHIP CARD SYSTEM
PROCÉDÉ POUR MODIFIER LES DONNÉES DE CONTRÔLE D'UNE CARTE À PUCE ET SYSTÈME DE CARTE À PUCE

(30) Priorität: 01.08.2014 DE 102014110990
(43) Veröffentlichungstag der Anmeldung: 07.06.2017
(73) Patentinhaber: Bundesdruckerei GmbH, 10969 Berlin (DE); CV Cryptovision GmbH, 45886 Gelsenkirchen (DE)
(72) Erfinder: SCHOLZE, Steffen, 13469 Berlin (DE); SCHWAN, Matthias, 10437 Berlin (DE); MÜLLER, Frank, 10407 Berlin (DE); HESSE, Danny, 10785 Berlin (DE); WIRTH, Klaus-Dieter, 12683 Berlin (DE); FILZHUTH, Elke, 12359 Berlin (DE); MAI, Thomas, 46236 Bottrop (DE); LOHOFF, Ansgar, 45879 Gelsenkirchen (DE)
(74) Vertreter: Richardt Patentanwälte PartG mbB
(86) Internationale Anmeldenummer: PCT/EP2015/066859
(87) Internationale Veröffentlichungsnummer: WO 2016/016080

(56) Entgegenhaltungen:
- EP-A2- 0 923 056
- KR-A- 20140 029 139
- US-A1- 2010 185 874
- Anonymous: "Read-copy-update - Wikipedia, the free encyclopedia", , 7. Juli 2014 (2014-07-07), XP055217512, Gefunden im Internet: URL:https://en.wikipedia.org/w/index.php?t itle=Read-copy-update&oldid=615965129 [gefunden am 2015-10-01]

## Beschreibung

Die Erfindung betrifft ein Verfahren zur Änderung der Kontrolldaten einer Chipkarte sowie ein Chipkartensystem, wobei es sich bei den Chipkarten insbesondere um hoheitliche Wert- oder Sicherheitsdokumente handeln kann.

Aus dem Stand der Technik sind verschiedene Chipkartenbetriebssysteme mit einem hierarchischen Chipkartendateisystem bekannt, wie beispielsweise in der ISO/IEC 7816-4 festgelegt. Ein solches Chipkartendateisystem hat in der Regel ein Root-Verzeichnis mit der Bezeichnung "Masterfile", abgekürzt MF. Bei JavaCard-OS muss ein MF nicht zwingend vorhanden sein. Dann verwaltet jede Applikation ihre Daten in einem DF ohne übergeordnetes MF. Die Wurzel des DF wird dann mittels eines Application Identifiers (AID) direkt beim Wählen der Applikation gesetzt.

Ferner hat ein Chipkartendateisystem Verzeichnisdateien, sogenannte "Directory Files", abgekürzt DFs. Eine Datendatei ist eine von einem DF abhängige Datei, welche auch als Elementary File, abgekürzt EF bezeichnet wird.

Das Chipkartendateisystem kann auch Datenobjekte beinhalten, auf die prinzipiell kein externer Zugriff erfolgen kann. Beispielsweise beinhaltet ein solches Datenobjekt einen Schüssel, insbesondere einen privaten Schlüssel eines asymmetrischen kryptografischen Schlüsselpaars, ein Passwort und/oder kryptographische Parameter. Solche internen Datenobjekte werden auch als Internal EF bezeichnet Sowohl eine EF als auch eine DF kann im Stand der Technik Kontrolldaten beinhalten, wie zum Beispiel eine Zugriffsbedingung auf die EF bzw. auf die von einer DF abhängigen Dateien. Im Stand der Technik sind Nutzdaten ausschließlich in den EFs gespeichert, nicht aber in den DFs oder den MFs (vergleiche hierzu Handbuch der Chipkarten, Wolfgang Rankl, Wolfgang Effing, Carl Hanser Verlag München, 2008, Kapitel 12, insbesondere Kapitel 12.3 und 12.8.). EP0923056 A2 offenbart ein Verfahren zur Verwaltung von Zugriffsrechten auf auf ein ISO 7816 konformes hierarchisches Chipkartendateisystem.

Hoheitliche Wert- oder Sicherheitsdokumente werden im Stand der Technik oft als Chipkarte implementiert, wie zum Beispiel der elektronische Reisepass, der elektronische Personalausweis und der elektronische Aufenthaltstitel der Bundesrepublik Deutschland. Bei solchen hoheitlichen Dokumenten ist bislang eine Änderung der Kontrolldaten im Wirkbetrieb der Chipkarte nicht möglich.

Der Erfindung liegt demgegenüber die Aufgabe zugrunde, ein verbessertes Verfahren zur Änderung der Kontrolldaten einer Chipkarte zu schaffen, welches insbesondere auch eine Änderung der Kontrolldaten bei hoheitlichen Anwendungen ermöglicht sowie ein entsprechendes Chipkartensystem.

Die der Erfindung zugrunde liegende Aufgabe wird mit den Merkmalen der unabhängigen Patentansprüche gelöst. Ausführungsformen der Erfindung sind in den abhängigen Patentansprüchen angegeben.

Unter einer "Chipkarte" wird hier insbesondere ein Wert- oder Sicherheitsdokument verstanden, welches zumindest einen Datenspeicher zur Speicherung zumindest eines Attributs und eine Kommunikations-Schnittstelle zum Auslesen des Attributs aufweist. Vorzugsweise hat das Dokument einen gesicherten Speicherbereich zur Speicherung des zumindest einen Attributs, um zu verhindern, dass das in dem Speicherbereich gespeicherte Attribut in unerlaubter Weise verändert oder ohne die dafür erforderliche Berechtigung ausgelesen wird.

Unter einem "Wert- oder Sicherheitsdokument" werden erfindungsgemäß papierbasierte und/oder kunststoffbasierte Dokumente verstanden, wie zum Beispiel elektronische Ausweisdokumente, insbesondere Reisepässe, Personalausweise, Aufenthaltstitel, Visa sowie Führerscheine, Fahrzeugscheine, Fahrzeugbriefe, Firmenausweise, Gesundheitskarten oder andere ID-Dokumente, Zahlungsmittel, insbesondere Banknoten, Bankkarten und Kreditkarten, Frachtbriefe oder sonstige Berechtigungsnachweise, verstanden, in die ein Datenspeicher zur Speicherung des zumindest einen Attributs integriert ist.

Unter "Kontrolldaten" einer Chipkarte werden im Gegensatz zu den Nutzdaten die zugeordneten Verwaltungsdaten verstanden, die insbesondere mindestens eine Zugriffsbedingung für den Zugriff auf die Nutzdaten festlegen. Ferner können die Kontrolldaten auch eine Angabe der Position der betreffenden Datei in dem Chipkartendateisystem beinhalten, beispielsweise in Form eines Zeigers auf den jeweiligen Nachfolgerknoten in dem Dateibaum der Chipkarte, sowie z.B. einen File Identifier (FID) und einen Application Identifier (AID).

Unter "Nutzdaten" werden dabei sämtliche im Dateisystem des Chipkartenbetriebssystems gespeicherten Daten verstanden, die zur Laufzeit vom Chipkartenbetriebssytem nur intern verwendet werden können (z.B. Schlüssel und zugehörige kryptografische Parameter) oder unter Einhaltung der in den Kontrolldaten gespeicherten Zugriffsbedingungen ausgelesen werden können (z.B. Daten des Inhabers). Insbesondere werden unter "Nutzdaten" hier solche Daten verstanden, die ein mit der Chipkarte interoperables Anwendungsprogramm eines Terminals benötigt, wie zum Beispiel biometrische Daten, insbesondere Fingerabdruckdaten, Gesichtsbiometriedaten und/oder Irisscandaten, die ein Terminal für eine biometrische Authentifizierung benötigt. Solche sensitiven Nutzdaten dürfen nur nach vorheriger Authentifizierung des Terminals aus der Chipkarte ausgelesen werden, wobei die hierzu erforderlichen kryptografischen Zugriffsbedingungen durch die jeweiligen Kontrolldaten spezifiziert werden.

Nach Ausführungsformen der Erfindung erfolgt die Änderung der Kontrolldaten einer Chipkarte im Wirkbetrieb, das heißt nachdem eine Initialisierung und eine Personalisierung sowie die Aktivierung der Chipkarte für den Wirkbetrieb bereits stattgefunden haben. Dies wird nach Ausführungsformen der Erfindung dadurch ermöglicht, dass die Kontrolldaten eines Datenobjektes, die auch also Datendatei bezeichnet wird, das heißt z.B. eines EF, nicht unmittelbar zusammen mit den Nutzdaten des EF selbst gespeichert sind. Im Gegenteil dazu beinhalten die Nutzdaten des Datenobjektes lediglich einen Zeiger auf denjenigen Speicherbereich der Chipkarte, in dem die Nutzdaten gespeichert sind. Dies ermöglicht es z.B., die Kontrolldaten eines Datenobjektes temporär in den Arbeitsspeicher zu kopieren, die gewünschten Änderungen der Kontrolldaten in der Kopie des Arbeitsspeichers vorzunehmen, und dann die geänderte Kopie der Kontrolldaten in den geschützten elektronischen Speicher zu speichern und zu aktivieren, wobei die ursprüngliche Version der Kontrolldaten in dem geschützten elektronischen Speicher überschrieben, gelöscht oder deaktiviert wird.

Besonders vorteilhaft ist gemäß Ausführungsformen der Erfindung, dass die Kontrolldaten und die Nutzdaten unabhängig voneinander und in verschiedenen Speicherbereichen des geschützten elektronischen Speichers gespeichert werden. Die nur lose Kopplung von Kontrolldaten mit ihren Nutzdaten über den Zeiger ermöglicht es, für den Vorgang des Änderns eine Kopie der Kontrolldaten in dem Arbeitsspeicher der Chipkarte zu halten. Obwohl der Arbeitsspeicher einer Chipkarte im Allgemeinen sehr klein ist, wird dennoch eine Speicherung der Kopie der zu ändernden Kontrolldaten in dem Arbeitsspeicher dadurch ermöglicht, dass hierzu nicht auch die Nutzdaten in den Arbeitsspeicher kopiert werden müssen. Dies hat den weiteren Vorteil, dass keine erneute Personalisierung der Chipkarte mit den Nutzdaten erfolgen muss, da diese unverändert und in dem ursprünglichen Speicherbereich in dem geschützten elektronischen Speicher verbleiben können, obwohl die diesen Nutzdaten zugeordneten Kontrolldaten verändert werden.

Nach Ausführungsformen der Erfindung erfolgt eine Änderung der Kontrolldaten, indem der gesamte Dateibaum, nicht aber die Nutzdaten, in den Arbeitsspeicher kopiert und dort die Änderung der Kontrolldaten vorgenommen wird, bevor der geänderte Dateibaum den ursprünglichen Dateibaum ersetzt. Nach Ausführungsformen der Erfindung kann dies auch für einen Teilbaum des Dateibaums oder ein einzelnes Datenobjekt des Dateibaums erfolgen. Es kann auch iterativ vorgegangen werden, indem nacheinander die Kontrolldaten nur jeweils eines Datenobjektes des Dateibaums geändert werden; letzteres ist besonders vorteilhaft, wenn der Arbeitsspeicher für die Kontrolldaten aller oder mehrere Datenobjekte nicht ausreichend groß ist.

Nach Ausführungsformen der Erfindung wird zur Änderung der Kontrolldaten initial zunächst ein Flag in dem geschützten elektronischen Speicher gesetzt, welches anzeigt, dass eine Änderung von Kontrolldaten erfolgen soll. Erst nachdem die geänderten Kontrolldaten in dem geschützten elektronischen Speicher gespeichert wurden, wird das Flag zurückgesetzt.

Dies hat den Vorteil, dass bei einem Abbruch des Änderungsverfahrens, beispielsweise durch Herausnehmen der Chipkarte aus dem Terminal, keine nur teilweise oder inkorrekte Änderung der Kontrolldaten erfolgt ist. Wird nämlich von dem Chipkartenbetriebssystem bei einer Verwendung der Chipkarte festgestellt, dass das Flag in dem geschützten elektronischen Speicher gesetzt ist, so bedeutet dies, dass die Chipkarte zunächst nicht verwendbar ist. Nach Ausführungsformen der Erfindung kann für einen solchen Fall vorgesehen sein, dass der Zustand der Chipkarte vor dem Start des Änderungsverfahrens wieder hergestellt wird, wonach dann das Flag zurückgesetzt wird und die Chipkarte wieder betriebsbereit ist. Dies kann dadurch erreicht werden, dass jeder Schritt in dem Änderungsverfahren durch Protokolldateien von dem Chipkartenbetriebssystem protokolliert wird, sodass vorgenommene Änderungen anhand dieser Protokolldateien wieder rückgängig gemacht werden können.

Nach einer anderen Ausführungsform werden die ursprünglichen Kontrolldaten nicht durch die geänderten Teile der Kontrolldaten überschrieben, sondern durch das Aktualisieren eines Zeiger auf das Wurzelverzeichnis (MF) oder das geänderte Unterverzeichnis (DF) erreicht. Dies ist ein atomarer Vorgang der entweder gar nicht oder komplett ausgeführt wird. Dadurch wird erreicht, dass entweder die kompletten ursprünglichen Kontrolldaten (MF oder DF) oder die kompletten geänderten Kontrolldaten eines Verzeichnisses (MF oder DF) zur Anwendung kommen. Dieses Vorgehen kann auch iteriert werden.

Nach einer weiteren Ausführungsform wird das Ersetzen der Kontrolldaten dadurch erreicht, dass sowohl die zu ersetzenden Kontrolldaten als auch die neuen Kontrolldaten als Kopie von einem "Master" als sogenannte "Images" vorliegen. Dann kann das Ändern der Kontrolldaten durch Überschreiben erfolgen und eine Verarbeitung durch das Chipkartenbetriebssystem ist nicht notwendig. Dies setzt allerdings voraus, dass alle Zeiger auf Nutzdaten fest vorgegeben und nicht chip-individuell sind.

Nach Ausführungsformen der Erfindung kann sich die Größe der Kontrolldaten eines Datenobjektes durch die Änderung der Kontrolldaten vergrößern. Dies kann insbesondere dann der Fall sein, wenn komplexere Zugriffsbedingungen für einen externen Zugriff auf die Nutzdaten definiert werden sollen. In diesem Fall kann die ursprüngliche Version der geänderten Datei nicht einfach durch die geänderte Version der Datei überschrieben werden, da die geänderte Datei größer ist als die ursprüngliche Datei. Nach Ausführungsformen der Erfindung erfolgt in diesem Fall durch das Chipkartenbetriebssystem eine Speicherung der geänderte Kopie der Datei in einem anderen Speicherbereich des geschützten elektronischen Speichers, der durch einen Zeiger identifiziert wird. Um den Dateibaum des Chipkartenbetriebssystems hierdurch nicht aufzutrennen, wird ferner die Datei des Vorgängerknotens der geänderten Datei ebenfalls aktualisiert, indem nämlich der ursprüngliche Zeiger auf den Speicherbereich des Nachfolgerknotens durch den geänderten Zeiger ersetzt wird. Da sich die Länge der Zeiger auf die Speicherbereiche aber nicht voneinander unterscheidet, ist es möglich, den geänderten Vorgängerknoten durch Überschreiben der vorherigen Version zu speichern.

Nach Ausführungsformen der Erfindung erfolgt ferner eine Aktualisierung des Chipkartenbetriebssystems, beispielsweise um eine Funktionalität in dem Chipkartenbetriebssystem zur Verfügung zu stellen, die eine Prüfung der durch die geänderten Kontrolldaten spezifizierten kryptografischen Zugriffsbedingung erlaubt.

Nach einer Ausführungsform der Erfindung handelt es sich bei dem Terminal des Chipkartensystems um ein Lesegerät für ein hoheitliches Dokument, wie zum Beispiel um ein Lesegerät für einen elektronischen Personalausweis, einen elektronischen Aufenthaltstitel oder einen elektronischen Pass.

Im Weiteren werden Ausführungsformen der Erfindung mit Bezugnahme auf die Zeichnungen näher erläutert.

Es zeigen:
- Figur 1: ein Blockdiagramm einer Ausführungsform eines erfindungsgemäßen Chipkartensystems und einer erfindungsgemäßen Chipkarte,
- Figur 2: eine Ausführungsform eines erfindungsgemäßen Verfahrens.

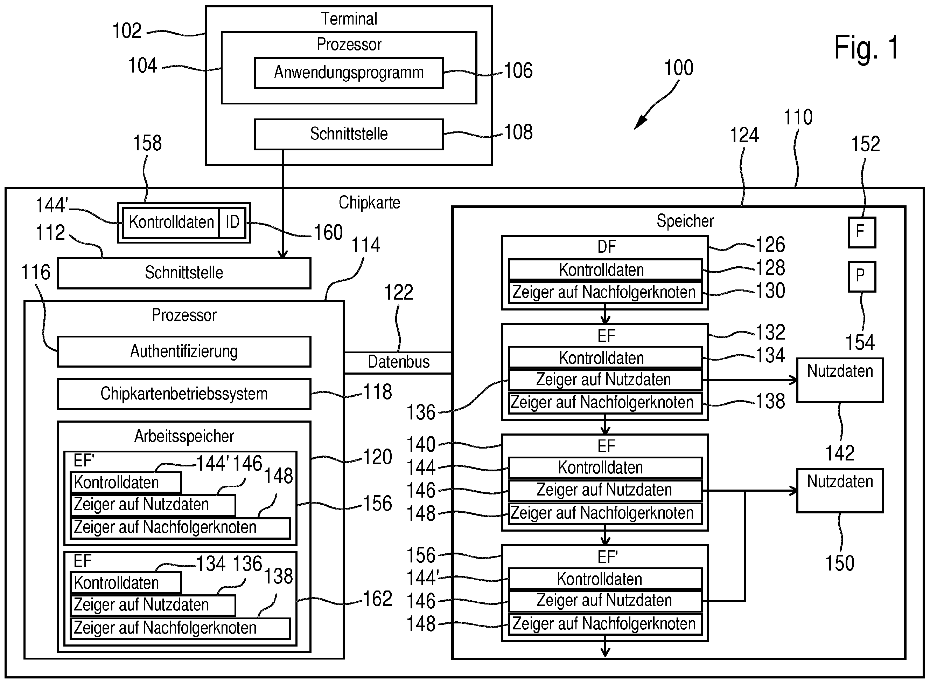

Die Figur 1 zeigt ein Chipkartensystem 100 mit einem Terminal 102. Bei dem Terminal 102 kann es sich beispielsweise um ein Lesegerät für ein hoheitliches Dokument, insbesondere für einen elektronischen Personalausweis, einen elektronischen Aufenthaltstitel oder einen elektronischen Reisepass, handeln. Der Terminal 102 hat einen Prozessor 104 zur Durchführung eines Anwendungsprogramms 106, welches mit einer Chipkarte 110 interoperabel ist, sowie eine Schnittstelle 108 zum Aufbau einer Kommunikationsverbindung mit einer entsprechenden Schnittstelle 112 der Chipkarte 110.

Die Schnittstellen 108 und 112 können als kontaktbehaftete oder drahtlose Schnittstellen ausgebildet sein, insbesondere als RFID oder NFC-Schnittstellen. Vorzugsweise verfügt die Chipkarte 110 nicht über eine eigene Energieversorgung, sondern wird durch Einkopplung elektromagnetischer Energie von der Schnittstelle 108 in die Schnittstelle 112 mit elektrischer Energie versorgt, wozu die Schnittstelle 112 im Falle der drahtlosen Ausprägung eine Antenne aufweist.

Die Chipkarte 110 hat einen Prozessor 114 zur Durchführung eines Programmmoduls 116 für die Authentifizierung des Terminals 102 oder die gegenseitige Authentifizierung des Terminals 102 und der Chipkarte 110. Hierzu kann das Programmmodul 116 beispielsweise diejenigen Schritte eines Challenge-Response-Protokolls implementieren, welche die Chipkarte 110 betreffen, wobei das Anwendungsprogramm 106 dann diejenigen Schritte des Challenge-Response-Protokolls implementieren kann, welche das Terminal 102 betreffen. Eine andere Möglichkeit ist die Authentifizierung mittels einer geheimen Kennung, z.B. einer sog. PIN, die ein Nutzer in das Terminal eingibt, und die von dem Programmmoduls 116 überprüft wird, z.B. nach dem PACE Protokoll, wie es vom Bundesamt für Sicherheit in der Informationsstechnik (BSI) spezifiziert worden ist.

Der Prozessor 114 dient ferner zur Ausführung eines Chipkartenbetriebssystems 118 und hat einen flüchtigen Arbeitsspeicher 120. Der Prozessor 116 ist mit der Schnittstelle 112 der Chipkarte 110 verbunden sowie über einen internen Datenbus 122 mit einem nichtflüchtigen geschützten elektronischen Speicher 124.

In dem Speicher 124 sind Dateien eines Chipkartendateisystems gespeichert, die einen Dateibaum bilden. Die Figur 1 zeigt exemplarisch eine DF 126 des Dateibaums, die Kontrolldaten 128 einschließlich einem Zeiger 130 auf einen Nachfolgerknoten, das heißt die EF 132, beinhaltet. Die EF 132 beinhaltet ebenfalls Kontrolldaten 134, einschließlich einem Zeiger 138 auf deren Nachfolgerknoten in dem Dateibaum, nämlich ein EF 140 sowie einen Zeiger 136 auf Nutzdaten 142, die der EF 132 zugeordnet sind, die aber nicht in der EF 132 oder einer anderen Datei des Dateibaums gespeichert sind.

Eine dazu analoge Struktur hat die EF 140, die Kontrolldaten 144 beinhaltet, einschließlich eines Zeigers 146, auf die der EF 140 zugeordneten Nutzdaten 150 und einen Zeiger 148 auf einem in der Figur 1 nicht gezeigten Nachfolgerknoten der EF 140 in dem Dateibaum.

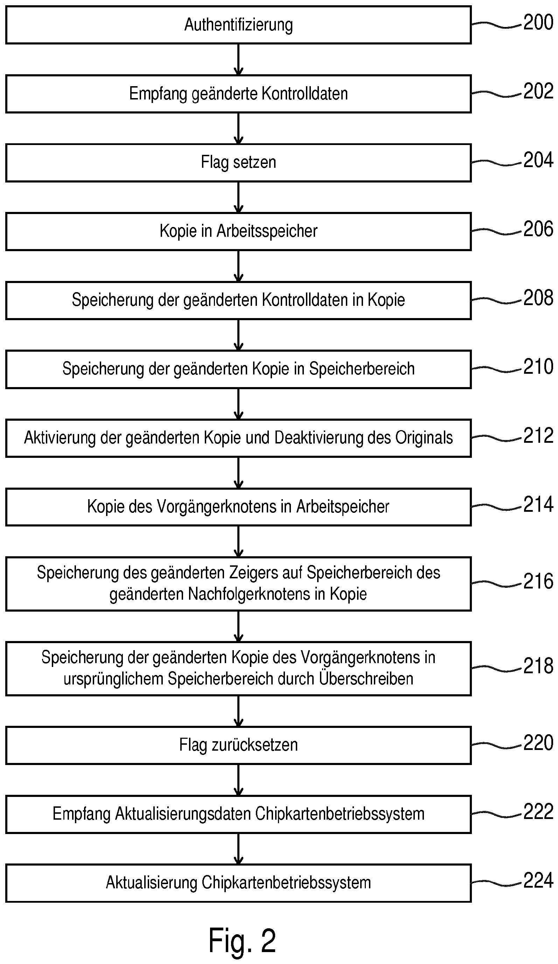

Zur Aktualisierung der Kontrolldaten 144 der EF 140 kann beispielsweise wie folgt vorgegangen werden, wie in der Figur 2 gezeigt:
In dem Schritt 200 erfolgt zunächst eine Authentifizierung des Terminals 102 gegenüber der Chipkarte 110. Neben der Authentifizierung kann auch eine Berechtigungsprüfung erfolgen, nämlich dahingehend, ob das Terminal 102 die erforderlichen Rechte zur Änderung von Kontrolldaten hat. Dies kann beispielsweise so erfolgen, dass das Terminal 102 ein Berechtigungszertifikat an die Chipkarte 110 überträgt, wobei in dem Berechtigungszertifikat die Rechte des Terminals 102 zur Änderung der Kontrolldaten angegeben sind.

In dem Schritt 202 empfängt die Chipkarte 110 von dem Terminal 102 geänderte Kontrolldaten, beispielsweise indem das Anwendungsprogramm 106 eine Kommando-APDU 158 von der Schnittstelle 108 an die Schnittstelle 112 sendet, welche die geänderten Kontrolldaten beinhaltet sowie auch eine Spezifikation der Datei des Chipkartendateisystems, deren Kontrolldaten zu ändern sind. Ohne Beschränkung der Allgemeinheit wird im Weiteren beispielhaft davon ausgegangen, dass es sich hierbei um die EF 140 bzw. deren Kontrolldaten 144 handelt.

In dem Schritt 204 setzt das Chipkartenbetriebssystem 118 ein Flag F 152 in dem Speicher 124. Ferner kann auch eine Protokolldatei P in dem Speicher 124 angelegt werden, um die nachfolgenden Schritte zur Änderung der Kontrolldaten zu protokollieren.

In dem Schritt 206 greift das Chipkartenbetriebssystem 118 über den internen Datenbus 122 auf den Speicher 124 zu, und liest die EF 140. Das Chipkartenbetriebssystem 118 speichert dann eine Kopie 156 der EF 140 in dem Arbeitsspeicher 120 ab. Die Kontrolldaten 144 der Kopie 156 werden dann aktualisiert. Hierzu beinhaltet die Kommando-APDU 158 die geänderten Kontrolldaten 144' und einen Identifikator (ID) 160 derjenigen Datei, deren Kontrolldaten zu ändern sind, hier der EF 140.

Das Chipkartenbetriebssystem 118 schreibt die geänderten Kontrolldaten 144' der APDU 158 in die Kopie 156 der EF 140, die temporär in dem Arbeitsspeicher 120 gespeichert ist und ersetzt hierdurch die vorherige Version der Kontrolldaten 144. Die Zeiger 146 und 148 bleiben hingegen unverändert (Schritt 208).

In dem Schritt 210 wird dann die geänderte Kopie EF' 156 der EF 140 in einem Speicherbereich des Speichers 124 gespeichert, der von dem Speicherbereich, in dem die EF 140 gespeichert ist, verschieden ist. Dies ist insbesondere dann erforderlich, wenn die Kontrolldaten 144' ein größeres Volumen haben als die Kontrolldaten 144, sodass die geänderte Kopie 156 größer ist als die Vorgängerversion, das heißt die EF 140. In dem Schritt 214 wird die geänderte Kopie 156, die in dem Speieher 124 gespeichert ist, aktiviert und das Original, das heißt die EF 140, deaktiviert oder gelöscht.

Da sich der Speicherbereich, in dem der Nachfolgerknoten der EF 132 gespeichert ist, geändert hat, wird nunmehr auch die EF 132 aktualisiert, indem in dem Schritt 214 eine Kopie 162 der EF 132 temporär in dem Arbeitsspeicher 120 gespeichert wird und in dem Schritt 216 der Zeiger 138 auf den Nachfolgerknoten in der Kopie 162 aktualisiert wird, indem der vorherige Zeiger auf die EF 140 durch einen Zeiger auf den Speicherbereich in dem Speicher 124 der Kopie EF' 156 ersetzt wird. Die übrigen Kontrolldaten 134 einschließlich dem Zeiger auf die Nutzdaten 136 können unverändert bleiben.

In dem Schritt 218 wird dann die geänderte Kopie 162 der EF 132 in dem Speicher 124 gespeichert, wobei dies so erfolgen kann, dass die EF 132 durch die Kopie 162 überschrieben wird. Dies ist möglich, da lediglich der Zeiger 138 aktualisiert wurde, sodass die Dateigröße der EF 132 und der geänderte Kopie 162 identisch sind.

Nachdem hierdurch der Änderungsvorgang der Kontrolldaten abgeschlossen worden ist, wird in dem Schritt 220 das Flag 152 zurückgesetzt und die Protokolldatei 154 wird gelöscht.

Anschließend kann auch eine Aktualisierung des Chipkartenbetriebssystems 118 erfolgen. Dies kann dann erforderlich sein, wenn die ursprüngliche Version des Chipkartenbetriebssystems 118 keine Funktion beinhaltet, um eine durch die geänderten Kontrolldaten 144' spezifizierte kryptografische Zugriffsbedingung auf die Nutzdaten 150 zu prüfen.

Beispielsweise wird durch die Kontrolldaten 144 als Zugriffsbedingung eine sogenannte Basic Access Control (BAC) spezifiziert, wohingegen durch die Kontrolldaten 144' zusätzlich zu der BAC eine Extended Access Control (EAC) gefordert wird, um auf die Nutzdaten 150 von extern lesend zugreifen zu können.

Falls die Vorversion des Chipkartenbetriebssystems 118 nur BAC, nicht aber EAC unterstützt, ist dann eine Aktualisierung des Chipkartenbetriebssystems 118 erforderlich, um auch die EAC-Funktionalität zur Verfügung zu stellen. Hierzu empfängt die Chipkarte 110 von dem Terminal 102 Aktualisierungsdaten für das Chipkartenbetriebssystem 118, welche Programmcodes für die Implementierung der zusätzlichen Funktion beinhalten. Anhand dieser Aktualisierungsdaten erfolgt dann in dem Schritt 224 eine Aktualisierung des Chipkartenbetriebssystems 118.

### Bezugszeichenliste

- 100: Chipkartensystem
- 102: Terminal
- 104: Prozessor
- 106: Anwendung
- 108: Schnittstelle
- 110: Chipkarte
- 112: Schnittstelle
- 114: Prozessor
- 116: Programm
- 118: Chipkartenbetriebssystem
- 120: Arbeitsspeicher
- 122: Datenbus
- 124: Speicher
- 126: DF
- 128: Kontrolldaten
- 130: Zeiger
- 132: EF
- 134: Kontrolldaten
- 136: Zeiger
- 138: Zeiger
- 140: EF
- 140': EF
- 142: Nutzdaten
- 144: Kontrolldaten
- 144': geänderte Kontrolldaten
- 146: Zeiger
- 148: Zeiger
- 150: Nutzdaten
- 152: Flag (F)
- 154: Protokolldatei (P)
- 156: Kopie der EF 140
- 158: APDU
- 160: Identifikator
- 162: Kopie der EF 132

## Patentansprüche

1. Verfahren zur Änderung der Kontrolldaten einer Chipkarte (110), wobei die Chipkarte ein Chipkartenbetriebssystem (100) mit einem hierarchischen Chipkartendateisystem, einen nicht-flüchtigen geschützten elektronischen Speicher (124), auf den ein externer Zugriff nur über einen Prozessor (114) der Chipkarte möglich ist, und einen flüchtigen Arbeitsspeicher (120) aufweist, wobei das Chipkartendateisystem Verzeichnisdateien (DFs) und Datendateien (EFs) beinhaltet, wobei ein Dateibaum bestehend aus zumindest einer Verzeichnisdatei (126) und mehreren Datendateien (132, 140,...) in dem geschützten elektronischen Speicher gespeichert ist, wobei in zumindest einer der Dateien Kontrolldaten (144) für Nutzdaten (150) gespeichert sind, die Nutzdaten in einem Speicherbereich des geschützten elektronischen Speichers gespeichert sind und ein Zeiger (146) auf diesen Speicherbereich in der zumindest einen Datendatei (140) gespeichert ist, wobei die Chipkarte für den Wirkbetrieb aktiviert ist, wobei zur Änderung der Kontrolldaten durch das Chipkartenbetriebssystem eine Kopie (156) zumindest eines die Datei (140) beinhaltenden Teilbaums des Dateibaums in der Chipkarte temporär in dem Arbeitsspeicher (120) gespeichert wird, geänderte Kontrolldaten (144') in der zumindest einen Datei des kopierten Teilbaums gespeichert werden, und die geänderte Kopie des Teilbaums in dem geschützten elektronischen Speicher permanent gespeichert und aktiviert wird, und der ursprüngliche Teilbaum gelöscht oder deaktiviert wird.

2. Verfahren nach Anspruch 1, wobei es sich bei dem Teilbaum um den gesamten Dateibaum handelt oder wobei der Teilbaum aus einem einzelnen Knoten des Dateibaums besteht, insbesondere aus einer der Verzeichnisdateien oder einer der Datendateien.

3. Verfahren nach Anspruch 1, wobei der Teilbaum zumindest eine der Verzeichnisdateien mit den von dieser Verzeichnisdatei hierarchisch abhängigen Datendatei beinhaltet, wobei die Kontrolldaten in der Verzeichnisdatei beinhaltet sind und die Kontrolldaten für diejenigen Nutzdaten gültig sind, auf welcher die Zeiger der hierarchisch von der Verzeichnisdatei abhängigen Datendateien zeigen.

4. Verfahren nach einem der vorhergehenden Ansprüche, wobei zur Änderung der Kontrolldaten einer der Dateien (140) so vorgegangen wird, dass initial von dem Chipkartenbetriebssystem ein Flag (152) in dem Arbeitsspeicher (120) gesetzt wird, welches den Beginn des Änderungsvorgangs zur Änderung der Kontrolldaten anzeigt, wobei die geänderten Kontrolldaten (144') ein größeres Datenvolumen haben als die ursprünglichen Kontrolldaten (144), sodass die geänderte Kopie (156) der zumindest einen Datei (140) des Teilbaums ein vergrößertes Datenvolumen hat, sodass die geänderte Kopie (156) in einem anderen Adressbereich des nichtflüchtigen elektronischen Speichers (124) gespeichert wird als die ursprüngliche Datei (140), wobei eine Datei (132) eines Vorgängerknotens der geänderten Datei in dem Teilbaum aktualisiert wird, indem das Chipkartenbetriebssystem eine Kopie (162) der Datei (132) des Vorgängerknotens in der Chipkarte temporär in dem Arbeitsspeicher speichert, einen in den Kontrolldaten der Datei beinhalteten Zeiger (138) auf den Nachfolgerknoten durch einen aktualisierten Zeiger auf den Speicherbereich ersetzt, indem die aktualisierte Datei (156) des Nachfolgerknotens gespeichert wurde, die geänderte Kopie (162) der Datei des Vorgängersknotens in dem geschützten elektronischen Speicher permanent gespeichert und aktiviert wird, in dem die ursprüngliche Datei des Vorgängerknotens überschrieben wird, wobei abschließend das Flag gelöscht wird.

5. Verfahren nach einem der vorhergehenden Ansprüche, mit folgenden weiteren Schritten:
- Authentifizierung eines Terminals (102) gegenüber der Chipkarte,
- Empfang von Änderungskontrolldaten (144'), die eine Änderung der Kontrolldaten spezifizieren, durch die Chipkarte,
- Durchführung einer Berechtigungsprüfung durch die Chipkarte, ob das Terminal zur Änderung der Kontrolldaten ausreichend berechtigt ist,
wobei die geänderten Kontrolldaten nur dann gespeichert werden, wenn die Berechtigungsprüfung des Terminals ergeben hat, dass die hierzu erforderliche Berechtigung vorliegt.

6. Verfahren nach Anspruch 5, wobei die Schritte der Authentifizierung des Terminals, des Empfangs von Änderungskontrolldaten und der Berechtigungsprüfung wiederholend für verschiedene Dateien durchgeführt werden.

7. Verfahren nach Anspruch 5 oder 6, wobei die Chipkarte eine drahtlose Schnittstelle (112) zur Kommunikation mit dem Terminal, insbesondere zum Empfang der Änderungskontrolldaten, und zur Einkopplung von elektrischer Energie zur Energieversorgung der Chipkarte aufweist.

8. Verfahren nach einem der vorgehenden Ansprüche, wobei in einer Initialisierungsphase der Chipkarte der unpersonalisierte Dateibaum in den geschützten elektronischen Speicher gespeichert wird und in der Initialisierungsphase die Kontrolldaten für die Nutzdaten gespeichert werden, und anschließend in einer Personalisierungsphase die Nutzdaten (150) und der Zeiger (146) gespeichert werden, wobei nach der Personalisierungsphase die Chipkarte für den Wirkbetrieb aktiviert wird.

9. Verfahren nach einem der vorhergehenden Ansprüche, wobei der Prozessor der Chipkarte den flüchtigen Arbeitsspeicher aufweist, wobei die Kopie des Teilbaums in den Arbeitsspeicher gespeichert wird, und die geänderten Kontrolldaten in der in dem Arbeitsspeicher gespeicherten Kopie des Teilbaums gespeichert werden.

10. Verfahren nach Anspruch 9, wobei durch die Speicherung der Kopie des Teilbaums mit den geänderten Kontrolldaten der ursprüngliche Teilbaum überschrieben, gelöscht oder deaktiviert wird.

11. Verfahren nach einem der vorhergehenden Ansprüche, wobei die Kontrolldaten eine kryptographische Zugriffsbedingung für einen externen Zugriff auf die Nutzdaten beinhalten und die Erfüllung der kryptografischen Zugriffsbedingung durch das Chipkartenbetriebssystem (118) überprüft wird, bevor durch das Chipkartenbetriebssystem ein Zugriff über einen internen Datenbus (122) der Chipkarte auf den geschützten elektronischen Speicher erfolgt, um die Nutzdaten (150) zu lesen und über eine Chipkartenschnittstelle (112) auszugeben, wobei die Chipkartenschnittstelle vorzugsweise drahtlos ausgebildet ist und sowohl zur Kommunikation als auch zur Einkopplung von elektrischer Energie zum Betrieb der Chipkarte dient, wobei der Dateibaum interne Datenobjekte beinhaltet, auf die das Chipkartenbetriebssystem grundsätzlich keinen externen Zugriff erlaubt, wobei ferner eine Aktualisierung des Chipkartenbetriebssystems erfolgt, wobei die aktualisierte Version des Chipkartenbetriebssystems eine Funktion beinhaltet, die die Überprüfung der kryptografischen Zugriffsbedingung entsprechend der aktualisierten Kontrolldaten ermöglicht.

12. Verfahren nach einem der vorhergehenden Ansprüche, wobei in den geänderten Kontrolldaten eine geänderte kryptographische Zugriffsbedingung für einen externen Zugriff auf die Nutzdaten spezifiziert ist und das Chipkartenbetriebssystem aktualisiert wird, um eine Funktion zur Prüfung der geänderten kryptographischen Zugriffsbedingung zu ergänzen.

13. Verfahren nach einem der vorhergehenden Ansprüche, wobei für einen externen Schreibzugriff zur Änderung der Kontrolldaten durch eine Authentifizierung und eine Berechtigung zur Prüfung mit Hilfe eines Zertifikats durchgeführt werden, wobei das Terminal direkt mit einer Chipkartenschnittstelle der Chipkarte oder über ein Netzwerk kommuniziert.

14. Verfahren nach einem der vorhergehenden Ansprüche, wobei es sich bei der Chipkarte um ein Dokument, insbesondere ein Wert- oder Sicherheitsdokument, handelt.

15. Chipkartensystem mit einem Terminal (102) und einer Chipkarte (110), wobei die Chipkarte ein Chipkartenbetriebssystem (100) mit einem hierarchischen Chipkartendateisystem, einen nicht-flüchtigen geschützten elektronischen Speicher (124), auf den ein externer Zugriff nur über einen Prozessor (114) der Chipkarte möglich ist, und einen flüchtigen Arbeitsspeicher (120) aufweist, wobei das Chipkartendateisystem Verzeichnisdateien (DFs) und Datendateien (EFs) beinhaltet, wobei ein Dateibaum bestehend aus zumindest einer Verzeichnisdatei (126) und mehreren Datendateien (132, 140,...) in dem geschützten elektronischen Speicher gespeichert ist, wobei in zumindest einer der Dateien Kontrolldaten (144) für Nutzdaten (150) gespeichert sind, die Nutzdaten in einem Speicherbereich des geschützten elektronischen Speichers gespeichert sind und ein Zeiger (146) auf diesen Speicherbereich in der zumindest einen Datendatei (140) gespeichert ist, wobei die Chipkarte für einen Wirkbetrieb aktiviert ist und so konfiguriert ist, dass zur Änderung der Kontrolldaten durch das Chipkartenbetriebssystem eine Kopie (156) zumindest eines die Datei (140) beinhaltenden Teilbaums des Dateibaums in der Chipkarte temporär in dem Arbeitsspeicher (120) gespeichert wird, geänderte Kontrolldaten (144') in der zumindest einen Datei des kopierten Teilbaums gespeichert werden, und die geänderte Kopie des Teilbaums in dem geschützten elektronischen Speicher permanent gespeichert und aktiviert wird, und der ursprüngliche Teilbaum gelöscht oder deaktiviert wird, und wobei der Terminal zum Senden von Änderungskontrolldaten, die die Änderung der Kontrolldaten spezifizieren, an die Chipkarte ausgebildet ist, ohne dass hierdurch die Nutzdaten geändert werden.

## Claims

1. A method for changing the control data of a chip card (110), wherein the chip card has a chip card operating system (100) with a hierarchical chip card file system, a protected non-volatile electronic storage unit (124) to which external access is only possible via a processor (114) of the chip card, and a volatile working storage unit (120), wherein the chip card file system contains index files (DFs) and data files (EFs), wherein a file tree consisting of at least one index file (126) and multiple data files (132, 140, ...) is stored in the protected electronic storage unit, wherein control data (144) for useful data (150) are stored in at least one of the files, the useful data are stored in a storage area of the protected electronic storage unit, and a pointer (146) to this storage area is stored in the at least one data file (140), wherein the chip card is activated for active operation, wherein, in order to change the control data by the chip card operating system, a copy (156) of at least one sub-tree, which contains the file (140), of the file tree in the chip card is temporarily stored in the working storage unit (120), changed control data (144') are stored in the at least one file of the copied sub-tree, and the changed copy of the sub-tree is permanently stored in the protected electronic storage unit and activated, and the original sub-tree is deleted or deactivated.

2. The method according to claim 1, wherein the sub-tree is the entire file tree, or wherein the sub-tree consists of an individual node of the file tree, in particular of one of the index files or one of the data files.

3. The method according to claim 1, wherein the sub-tree contains at least one of the index files with the data file hierarchically dependent on this index file, wherein the control data are contained in the index file and the control data are valid for the useful data to which the pointers of the data files hierarchically dependent on the index file point.

4. The method according to any one of the preceding claims, wherein, in order to change the control data of one of the files (140), a flag (152) is initially set in the working storage unit (120) by the chip card operating system and indicates the start of the process for changing the control data, wherein the changed control data (144') have a greater data volume than the original control data (144), such that the changed copy (156) of the at least one file (140) of the sub-tree has an enlarged data volume, such that the changed copy (156) is stored in another address area of the non-volatile electronic storage unit (124) as compared to the original file (140), wherein a file (132) of a predecessor node of the changed file is updated in the sub-tree in that the chip card operating system temporarily stores a copy (162) of the file (132) of the predecessor node in the chip card in the working storage unit, a pointer (138) to the successor node, which pointer is contained in the control data of the file, is replaced by an updated pointer to the storage area in which the updated file (156) of the successor node has been stored, and the changed copy (162) of the file of the predecessor node is permanently stored in the protected electronic storage unit and is activated by overwriting of the original file of the predecessor node, wherein the flag is then deleted.

5. The method according to any one of the preceding claims, with the following further steps:
- authenticating a terminal (102) to the chip card,
- receiving, by the chip card, change control data (144') specifying a change to the control data,
- performing a check by the chip card to authorise whether the terminal is sufficiently authorised to change the control data, wherein the changed control data is stored only if the authorisation check for the terminal has revealed that the necessary authorisation is present.

6. The method according to claim 5, wherein the steps for authentication of the terminal, receipt of change control data, and the authorisation check are performed repeatedly for different files.

7. The method according to claim 5 or 6, wherein the chip card has a wireless interface (112) for communication with the terminal, in particular for receiving the change control data, and for coupling in electrical energy for supplying energy to the chip card.

8. The method according to any one of the preceding claims, wherein in an initialisation phase of the chip card the unpersonalised file tree is stored in the protected electronic storage unit and the control data for the useful data are stored in the initialisation phase, and then in a personalisation phase the useful data (150) and the pointer (146) are stored, wherein the chip card is activated for active operation after the personalisation phase.

9. The method according to any one of the preceding claims, wherein the processor of the chip card comprises the volatile working storage unit, wherein the copy of the sub-tree is stored in the working storage unit, and the changed control data are stored in the copy of the sub-tree stored in the working storage unit.

10. The method according to claim 9, wherein the original sub-tree is overwritten, deleted or deactivated by the storage of the copy of the sub-tree with the changed control data.

11. The method according to any one of the preceding claims, wherein the control data contain a cryptographic access condition for external access to the useful data, and satisfaction of the cryptographic access condition is checked by the chip card operating system (118) before access by the chip card operating system to the protected electronic storage unit via an internal data bus (122) of the chip card is granted in order to read the useful data (150) and output same via a chip card interface (112), wherein the chip card interface is preferably wireless and is used both for communication and for coupling in electrical energy for operation of the chip card, wherein the file tree contains internal data objects, to which the chip card operating system does not allow any external access in principle, wherein the chip card operating system is also updated, wherein the updated version of the chip card operating system contains a function which makes it possible to check the cryptographic access condition in accordance with the updated control data.

12. The method according to any one of the preceding claims, wherein a changed cryptographic access condition for external access to the useful data is specified in the changed control data and the chip card operating system is updated in order to supplement a function for checking the changed cryptographic access condition.

13. The method according to any one of the preceding claims, wherein, for external write access to change the control data, an authentication and an authorisation for checking with the aid of a certificate are performed, wherein the terminal communicates directly with a chip card interface of the chip card or via a network.

14. The method according to any one of the preceding claims, wherein the chip card is a document, in particular a value or security document.

15. A chip card system having a terminal (102) and a chip card (110), wherein the chip card comprises a chip card operating system (100) with a hierarchical chip card file system, a non-volatile protected electronic storage unit (124) to which external access is only possible via a processor (114) of the chip card, and a volatile working storage unit (120), wherein the chip card file system contains index files (DFs) and data files (EFs), wherein a file tree consisting of at least one index file (126) and multiple data files (132, 140, ...) is stored in the protected electronic storage unit, wherein control data (144) for useful data (150) are stored in at least one of the files, the useful data are stored in a storage area of the protected electronic storage unit, and a pointer (146) to this storage area is stored in the at least one data file (140), wherein the chip card is activated for active operation and is configured such that, in order to change the control data by the chip card operating system, a copy (156) of at least one sub-tree, which contains the file (140), of the data tree in the chip card is temporarily stored in the working storage unit (120), changed control data (144') is stored in the at least one file of the copied sub-tree, and the changed copy of the sub-tree is permanently stored in the protected electronic storage unit and activated, and the original sub-tree is deleted or deactivated, and wherein the terminal for sending change control data specifying the change to the control data is formed on the chip card, without the useful data being changed as a result.

## Revendications

1. Procédé de modification de données de commande d'une carte à puce (110), dans lequel la carte à puce présente un système d'exploitation de carte à puce (100) avec un système de données de carte à puce hiérarchique, une mémoire (124) électronique protégée non volatile à laquelle un accès externe n'est possible que par le biais d'un processeur (114) de la carte à puce, et une mémoire de travail (120) volatile, où le système de données de carte à puce contient des données de répertoire (DFs) et des données de fichier (EFs), où une arborescence de données constituée d'au moins une donnée de répertoire (126) et de plusieurs données de fichiers (132, 140, ...) est stockée dans la mémoire électronique protégée, où des données de commande (144) pour des données d'utilisation (150) sont stockées dans au moins une des données, les données d'utilisation sont stockées dans une zone de mémoire de la mémoire électronique protégée et un pointeur (146) est stocké sur cette zone de mémoire dans l'au moins une donnée de fichier (140), où la carte à puce est activée pour le fonctionnement opérationnel, où une copie (156) d'au moins une arborescence partielle contenant la donnée (140) de l'arborescence de données est stockée temporairement dans la carte à puce dans la mémoire de travail (120) pour la modification des données de commande par le système d'exploitation de la carte à puce,
des données de commande (144') modifiées sont stockées dans l'au moins une donnée de l'arborescence partielle copiée, et la copie modifiée de l'arborescence partielle est stockée de manière permanente dans la mémoire électronique protégée et est activée, et l'arborescence partielle d'origine est effacée ou désactivée.

2. Procédé selon la revendication 1, dans lequel, dans le cas de l'arborescence partielle, il s'agit de l'arborescence de données complète ou dans lequel l'arborescence partielle est constituée de nœuds individuels de l'arborescence de données, en particulier, d'une des données de répertoire ou d'une des données de fichier.

3. Procédé selon la revendication 1, dans lequel l'arborescence partielle contient au moins une des données de répertoire avec les données de fichier correspondant hiérarchiquement de cette donnée de répertoire, où les données de commande sont contenues dans la donnée de répertoire et les données de commande sont valables pour les données d'utilisation en question sur lesquelles les pointeurs des données de fichier correspondant hiérarchiquement de la données de répertoire sont orientés.

4. Procédé selon l'une des revendications précédentes, dans lequel, pour la modification des données de commande, on procède avec une des données (140) pour qu'initialement un drapeau (152) soit placé dans la mémoire de travail (120), lequel indique le début du processus de modification pour la modification des données de commande, où les données de commande (144') modifiées ont un volume de données plus important que les données de commande (144) d'origine de sorte que la copie (156) modifiée de l'au moins une donnée (140) de l'arborescence partielle a un volume de données agrandi, de sorte que la copie (156) modifiée est stockée dans une autre zone d'adresse de la mémoire (124) électronique non volatile sous forme de donnée (140) d'origine, où une donnée (132) d'un nœud de précurseur de la donnée modifiée est actualisée dans l'arborescence partielle en ce que le système d'exploitation de carte à puce stocke temporairement dans la mémoire de travail une copie (162) de la donnée (132) du nœud de précurseur dans la carte à puce, remplace un pointeur (138) pour le nœud de succession contenu dans les données de commande de la donnée par un pointeur actualisé sur la zone de mémoire en ce que la donnée (156) actualisée du nœud de succession a été stockée, la copie (162) modifiée de la donnée du nœud de précurseur est stockée de manière permanente dans la mémoire électronique protégée et est activée en ce que la donnée d'origine du nœud de précurseur est écrasée, ce par quoi, le drapeau est ensuite effacé.

5. Procédé selon l'une des revendications précédentes, avec les autres étapes suivantes :
- l'authentification d'un terminal (102) vis-à-vis de la carte à puce,
- la réception de données de commande de modification (144') qui spécifient une modification des données de commande, par la carte à puce,
- l'exécution d'une vérification d'habilitation par la carte à puce que le terminal est suffisamment habilité pour la modification des données de commande,
où les données de commande modifiées ne sont stockées que si la vérification de l'habilitation du terminal a eu pour résultat qu'une habilitation nécessaire est présente à cet effet.

6. Procédé selon la revendication 5, dans lequel les étapes de l'authentification du terminal, de la réception de données de commande de modification et de la vérification de l'habilitation sont exécutées de manière répétée pour diverses données.

7. Procédé selon la revendication 5 ou la revendication 6, dans lequel la carte à puce présente une interface (112) sans fil pour la communication avec le terminal, notamment, pour la réception des données de commande de modification, et pour le couplage d'énergie électrique pour l'approvisionnement en énergie de la carte à puce.

8. Procédé selon l'une des revendications précédentes, dans lequel, dans une phase d'initialisation de la carte à puce, l'arborescence de données non personnalisée est stockée dans la mémoire électronique protégée et, dans la phase d'initialisation, les données de commande sont stockées pour les données d'utilisation, et ensuite, dans une phase de personnalisation, les données d'utilisation (150) et le pointeur (146) sont stockés, où, après la phase de personnalisation, la carte à puce est activée pour le fonctionnement opérationnel.

9. Procédé selon l'une des revendications précédentes, dans lequel le processeur de la carte à puce présente la mémoire de travail volatile, où la copie de l'arborescence partielle est stockée dans la mémoire de travail et les données de commande modifiées sont stockées dans la copie de l'arborescence partielle stockée dans la mémoire de travail.

10. Procédé selon la revendication 9, dans lequel l'arborescence partielle d'origine est écrasée, effacée ou désactivée par le stockage de la copie de l'arborescence partielle avec les données de commande modifiées.

11. Procédé selon l'une des revendications précédentes, dans lequel les données de commande contiennent une condition d'accès cryptographique pour un accès externe sur les données d'utilisation et la satisfaction à la condition d'accès cryptographique est vérifiée par le système d'exploitation de carte à puce (118) avant qu'un accès sur la mémoire électronique protégée n'ait lieu par le système d'exploitation de carte à puce par le biais d'un bus de données (122) interne de la carte à puce, afin de lire les données d'utilisation (150) et les émettre par le biais d'une interface de carte à puce (112), où l'interface de carte à puce est conçue de préférence sans fil et sert à la fois pour la communication et le couplage d'énergie électrique pour le fonctionnement de la carte à puce, où l'arborescence de données contient des objets de donnée internes sur lesquels le système d'exploitation de carte à puce ne permet de base aucun accès externe, où, en outre, une actualisation du système d'exploitation de carte à puce a lieu, où la version actualisée du système d'exploitation de carte à puce contient une fonction qui permet la vérification de la condition d'accès cryptographique conformément aux données de commande actualisées.

12. Procédé selon l'une des revendications précédentes, dans lequel une condition d'accès cryptographique modifiée est spécifiée dans les données de commande modifiées pour un accès externe sur les données d'utilisation et le système d'exploitation de carte à puce est actualisé pour compléter une fonction pour la vérification de la condition d'accès cryptographique modifiée.

13. Procédé selon l'une des revendications précédentes, dans lequel, pour un accès en écriture externe, pour la modification des données de commande, une authentification et une habilitation pour la vérification sont exécutées à l'aide d'un certificat, où le terminal communique directement avec une interface de carte à puce de la carte à puce ou par le biais d'un réseau.

14. Procédé selon l'une des revendications précédentes, dans lequel, dans le cas de la carte à puce, il s'agit d'un document, notamment d'un document de valeur ou de sécurité.

15. Système de carte à puce doté d'un terminal (102) et d'une carte à puce (110), dans lequel la carte à puce présente un système d'exploitation de carte à puce (100) avec un système de données de carte à puce hiérarchique, une mémoire (124) électronique protégée non volatile, sur laquelle un accès externe n'est possible que par le biais d'un processeur (114) de la carte à puce, et une mémoire de travail (120) volatile, où le système de données de carte à puce contient des données de répertoire (DFs) et des données de fichiers (EFs), où une arborescence de données constituée d'au moins une donnée de répertoire (126) et de plusieurs données de fichier (132, 140, ...) est stockée dans la mémoire électronique protégée, où des données de commande (144) pour des données d'utilisation (150) sont stockées dans au moins une des données, les données d'utilisation sont stockées dans une zone de mémoire de la mémoire électronique protégée et un pointeur (146) est stocké sur cette zone de mémoire dans l'au moins une donnée de fichier (140), où la carte à puce est activée pour le fonctionnement opérationnel, et est configurée que, pour la modification des données de commande par le système d'exploitation de carte à puce une copie (156) d'au moins une arborescence partielle contenant la donnée (140) de l'arborescence de données soit stockée temporairement dans la carte à puce dans la mémoire de travail (120), des données de commande (144') modifiées sont stockées dans l'au moins une donnée de l'arborescence partielle copiée, et la copie modifiée de l'arborescence partielle est stockée de manière permanente dans la mémoire électronique protégée et est activée, et l'arborescence partielle d'origine est effacée ou désactivée, et où le terminal est conçu pour l'envoi de données de commande de modification qui spécifient la modification des données de commande à la carte à puce sans que les données d'utilisation ne soient modifiées par ceci.
